# EUROPÄISCHE PATENTSCHRIFT

(11) **EP 0 708 897 B1**
(45) Veröffentlichungstag und Bekanntmachung des Hinweises auf die Patenterteilung: **23.04.1997**
(21) Anmeldenummer: 94920394.7
(22) Anmeldetag: 08.07.1994
(51) Int. Cl.: F16J 15/32

(54) **DICHTUNGSANORDNUNG**
SEALING ARRANGEMENT
DISPOSITIF D'ETANCHEITE

(30) Priorität: 12.07.1993 DE 4323266
(43) Veröffentlichungstag der Anmeldung: 01.05.1996
(73) Patentinhaber: Busak + Shamban GmbH & Co., D-70565 Stuttgart (DE)
(72) Erfinder: JORDAN, Holger, D-70771 Leinfelden/Echterdingen (DE)
(74) Vertreter: KOHLER SCHMID + PARTNER
(86) Internationale Anmeldenummer: DE9400789
(87) Internationale Veröffentlichungsnummer: WO9502776

(56) Entgegenhaltungen:
- DE-A- 1 475 603
- DE-A- 3 327 624

## Beschreibung

Die Erfindung betrifft eine Anordnung zum Abdichten eines Spalts zwischen zwei zueinander konzentrischen, gegeneinander beweglichen Maschinenteilen, von denen ein erstes Maschinenteil eine Nut und ein zweites Maschinenteil eine der Nut gegenüberliegende glatte Anlagefläche aufweist, wobei in die Nut ein Dichtring aus einem gummielastischen Material einlegbar ist, wobei der Dichtring unter Fluiddruckbeaufschlagung in Richtung einer radial gerichteten Fläche der Nut auslenkbar ist, wobei sich die druckabhängige Auslenkung des Dichtrings bei einer Druckerniedrigung selbsttätig, in Richtung der Ausgangslage des Dichtrings im drucklosen Zustand, erniedrigt, wobei der Dichtring zum Nutgrund gerichtete spreizbare Absätze aufweist, die den Bereich einer statischen Abdichtung und mit dem Nutgrund einen begrenzten abgeschlossenen Ringraum bilden, wobei der Dichtring über Schnittlinien der Absätze am Nutgrund anliegend vorgespannt ist, wobei eine Dichtringfläche mit der Anlagefläche den Bereich einer dynamischen Abdichtung bildet, die proportional zur Fluiddruckbeaufschlagung druckentlastbar ist, und wobei der Dichtring im Querschnitt gesehen, im Bereich der dynamischen Abdichtung eine druckresistente und im Bereich der statischen Abdichtung eine stark druckbeeinflußbare Körpergeometrie aufweist.

Eine derartige Anordnung zum Abdichten eines Spalts ist durch die DE-OS 14 75 603 bekanntgeworden.

Der bekannte Dichtring liegt im Einbauzustand mit einer Dichtringfläche an einer Anlagefläche des einen Maschinenteils und mit spreizbaren Absätzen am Nutgrund eines zweiten Maschinenteils an. Im Einbauzustand weist der Dichtring eine bestimmte Vorspannung auf. Die Querschnittsgeometrie des Dichtrings ist so ausgebildet, daß sowohl die niederdruckseitige, als auch die hochdruckseitige Dichtringflanke parallel zu den Nutflanken der Nut ausgerichtet ist. Bei einer Fluiddruckbeaufschlagung wird der Dichtring zur niederdruckseitigen Nutflanke ausgelenkt und liegt flächenmäßig an der Nutflanke an. Bei einer weiteren Fluiddruckbeaufschlagung wird der Dichtring derart verformt, daß er flächenhaft an der niederdruckseitigen Nutflanke und am Nutgrund anliegt. Der bekannte Dichtring reagiert auf eine Fluiddruckbeaufschlagung mit einer zunehmenden Materialdeformation des Dichtrings. Daher verkürzen sich die Lebensdauer des Dichtrings und Standzeiten der Dichtungsanordnung.

Bei der aus der DE-OS 21 04 859 bekannten Dichtungsanordnung liegt ein Dichtring im Einbauzustand mit einer Dichtkante an einer Anlagefläche des einen Maschinenteils und in einer Ringnut des anderen Maschinenteils am Nutgrund mit bestimmter Vorspannung an. Die Querschnittsform des bekannten Dichtrings weist einen zum Nutgrund ausgerichteten Abschnitt und einen zur Dichtfläche ausgerichteten Abschnitt auf, die über einen dehnbaren Mittelsteg miteinander verbunden sind. Die beiden Abschnitte der Querschnittsform des Dichtrings sind als Vollkörper ausgebildet. Daher kann die Vorspannung des Dichtrings nicht über den am Nutgrund anliegenden Abschnitt, d.h., im Bereich einer statischen Abdichtung abgebaut werden. Eine zunehmende Druckbeaufschlagung führt daher zu einer Zunahme der radialen Druckkomponente auf die Dichtkante, so daß die Druckbelastung des bekannten Dichtrings an der Dichtkante proportional zur Druckbeaufschlagung steigt. Eine Hochdruck-Beaufschlagung des bekannten Dichtrings ist daher nicht möglich.

Weiterhin ist aus der DE-GM 18 71 830 eine Dichtungsanordnung für zwei gegeneinander bewegliche Maschinenteile mit einem auslenkbaren Dichtring bekanntgeworden. Unter einer Druckbeaufschlagung wird der bekannte Dichtring an die niederdruckseitige Nutflanke gedrückt. Aufgrund der Querschnittsform des Dichtrings, einem Vollkörper mit konkav ausgebildeten Seitenflächen, wird der Dichtring unter Druckbeaufschlagung in der Nut verpresst. Die Verpressung des Dichtrings führt zu einer Zunahme der radialen Druckkomponente und einer verstärkten Belastung der Dichtkante.

Auch aus der DE-OS 40 38 619 ist eine Anordnung zum Abdichten eines Spalts bekanntgeworden. Bei der bekannten Dichtungsanordnung wird ein im Querschnitt ausgebildetes Scheibenprofil in eine Schräglage, die Arbeitslage, verkippt, in der das Dichtungselement verkeilt und die Arbeitslage bleibend inne behält. Das bekannte Dichtungselement ist maßlich so ausgelegt, daß es beim Einbau zwischen den Maschinenteilen sowohl vom Nutgrund des einen Maschinenelements wie auch von der Außenumfangsfläche des anderen Maschinenelements beabstandet ist. Erst beim Verschwenken des bekannten Dichtungselements kommen Abschnitte des Dichtungselements in Anlage mit dem Nutgrund und der Außenumfangsfläche, und ein Spalt zwischen den Maschinenelementen wird dabei abgedichtet. Das bekannte Dichtungselement, ein Vollprofil, wird somit im Außenbereich gestaucht und im Innenbereich gedehnt.

Aufgabe der vorliegenden Erfindung ist es, das bekannte Dichtungselement derart weiterzubilden, daß das Reibkraft und Extrusionsverhalten im Bereich der dynamischen Abdichtung verbessert werden.

Diese Aufgabe wird erfindungsgemäß dadurch gelöst, daß der Dichtring, im Querschnitt gesehen, zur Hochdruckseite H und zur Niederdruckseite N hin offene Ausnehmungen aufweist, die in radialer Richtung die Absätze derart begrenzen, daß der Dichtring bei einer Fluiddruckbeaufschlagung im Bereich der dynamischen Abdichtung zur Niederdruckseite N hin verschwenkt und daß sich ein durch einen der spreizbaren Absätze, eine von der niederdruckseitigen Ausnehmung erzeugte Dichtringfläche und die niederdruckseitige Nutflanke begrenzter Freiraum verringert.

Der erfindungsgemäße Dichtring hat damit den wesentlichen Vorteil, daß er gegenüber bekannten Abdichtelementen eine wesentlich verbesserte Flexibilität sowohl bei einer Belastung in axialer wie auch in radialer Richtung aufweist.

Unter maßlicher Interferenz ist hier das Übermaß eines Dichtrings bezogen auf den Einbauraum zu verstehen. Das heißt, ist ein Dichtring mit Übermaß gefertigt, so kann er nur unter Materialverpressung in einen Einbauraum eingebracht werden. Ist ein derartiger Dichtring montiert, so liegt er unter einer gewissen Eigenvorspannung im Einbauraum.

Der erfindungsgemäße Dichtring weißt eine Körpergeometrie auf, die es erlaubt, daß die Übermaße bezogen auf die Nut im Bereich der statischen Abdichtung über spreizbare Absätze, die am Nutgrund anliegen, kompensiert werden. Diese Maßnahme gewährleistet, daß die Reibwerte im dynamischen Abdichtbereich kleingehalten werden können, d.h., an der dynamisch wirkenden Dichtfläche wird der Dichtring nicht gedehnt. Materialermüdungen sind deshalb in diesem Bereich auszuschließen. Mit der erfindungsgemäßen Ausgestaltung des Dichtrings können deshalb große Interferenzen realisiert werden, ohne daß ein hohes Reibkräfteniveau bei Niederdruck im Bereich der dynamischen Dichtkante entsteht. Die radiale Vorspannung des erfindungsgemäßen Dichtrings ist damit flexibel über den veränderbaren Formwiderstand des Dichtrings im Bereich der statischen Abdichtung einstellbar. Weiterhin können mit dem erfindungsgemäßen Dichtring Toleranzen in einem weiten Bereich ohne eine Verschlechterung der Dichtfunktion ausgeglichen werden. Wird der erfindungsgemäße Dichtring druckbeaufschlagt, so legt er sich mehr oder weniger stark an einer ortsfesten Fläche in der Nut an, indem er sich derart verformt, daß sich im dynamischen Abdichtbereich ein Pressungsmaximum einstellt, das sich mit steigendem Druck verstärkt und der erfindungsgemäße Dichtring liegt in einem zunehmenden Maße nur noch in Linienberührung auf der Anlagefläche des zweiten Maschinenelements. Der erfindungsgemäße Dichtring kann unter Druck zur Niederdruckseite hin flexibel ausweichen, in dem er sich aus der Ausgangslage verschwenkt, um bei fallendem Druck wieder in die Ausgangslage zurückzuschwenken. Das heißt, mit steigendem Fluiddruck ist eine Entlastung der dynamischen Dichtfläche bzw. Dichtkante möglich und die dynamischen Berührungspunkte lassen sich verbessert schmieren, weil das unter druckstehende Medium bis an die Dichtkante ungehindert vordringen kann.

In einer bevorzugten Weiterbildung ist die Nut zur Hochdruckseite H hin offen, so daß ein profilierter Abschnitt gebildet ist.

Dies hat den Vorteil, daß der erfindungsgemäße Dichtring sowohl in die dichtungstechnisch einfachste Nutform einbringbar ist und als auch einem weiten Einsatzspektrum in der allgemeinen Dichtungstechnik zur Verfügung steht.

Der Dichtring weist, im Querschnitt gesehen, im Bereich der dynamischen Abdichtung eine druckresistente und im Bereich der statischen Abdichtung eine stark druckbeeinflußbare Körpergeometrie auf.

Dies hat den Vorteil, daß im Bereich der dynamischen Dichtkante die erfindungsgemäßen Dichtringkonturen weitgehend druckunabhängig stabil sind. Der erfindungsgemäße Dichtring läßt sich deshalb durch bestimmte Vorgaben theoretisch gut auslegen und diese Auslegungswerte werden danach im Praxisbetrieb auch dauerhaft erreicht.

In einer weiteren Ausgestaltung der Erfindung sind die druckbeeinflußbaren Körpergeometrien von Dichtringabschnitten gebildet, die derart zueinander ausgerichtet sind, daß sie druckabhängig veränderbare Winkel definieren.

Dies hat den Vorteil, daß die Dichtringabschnitte wie "Scharniere" funktionieren, die sich druckabhängig mehr oder weniger stark öffnen oder schließen. Durch das gummielastische Material, z.B. Polyurethan, oder eine Mischung von verschiedenen gummielastischen Materialien, die auch in Teilbereichen des Dichtrings in reiner Form angeordnet sein können, ist es möglich, daß der erfindungsgemäße Dichtring die Dichtfunktion immer druckangepaßt übernimmt.

Bei einer weiteren bevorzugten Ausführungsform bildet der Dichtring mit der Dichtringfläche bei einer Fluiddruckbeaufschlagung mit der Anlagefläche des zweiten Maschinenteils einen sich zur Hochdruckseite H hin öffnenden, in der Größe druckabhängigen, Keilspalt.

Dies hat den Vorteil, daß der erfindungsgemäße Dichtring druckentlastbar ist, d.h., je höher der Fluiddruck den Dichtring belastet, desto größer ist die Entlastung der Dichtkante. Über diese Maßnahme werden die Reibwerte zwischen Dichtring und Anlagefläche klein gehalten.

In einer bevorzugten Ausführungsform ist der Dichtring, im Querschnitt gesehen, von der Dichtringfläche, die zur Anlagefläche hinweißt, von an die Dichtringfläche angrenzenden geneigt auseinanderlaufenden ersten und zweiten Kegelflächen, von an die ersten und zweiten Kegelflächen angrenzenden geneigt aufeinanderzulaufenden dritten und vierten Kegelflächen und von sich daran anschließenden geneigt auseinanderlaufenden ersten und zweiten Absätzen gebildet, und die dritten und vierten Kegelflächen begrenzen mit den Absätzen die Ausnehmungen, wobei die Absätze zum Nutgrund weisend unter einem Winkel miteinander verbunden sind und mit den dritten und vierten Kegelflächen einen Winkel (β₁, β₂, β₃, β₄, β₅) bilden.

Diese konkrete geometrische Ausgestaltung des erfindungsgemäßen Dichtrings hat den Vorteil, daß der Dichtring einfach zu fertigen ist und daß Schnittlinien von den aneinandergrenzenden Kegelflächen gebildet werden, die im Betrieb die Funktion einer Dichtkante, eines Schwenkpunktes, eines Abstandhalters, eines Gelenks usw. übernehmen können.

In weiterer bevorzugter Ausgestaltung der Erfindung ist der Dichtring symmetrisch aufgebaut. Dies hat den Vorteil, daß der erfindungsgemäße Dichtring erleichtert montiert werden kann, ohne daß auf eine bestimmte Einbaulage geachtet werden müßte.

In einer weiteren möglichen Ausgestaltung der Erfindung sind die Absätze auf der Hochdruckseite H und der Niederdruckseite N unterschiedlich lang und / oder breit ausgebildet.

Dies hat den Vorteil, daß der erfindungsgemäße Dichtring über die Dimensionierung der Absätze an spezielle Dichtungsproblematiken einfach anpaßbar ist und unterschiedlichste Dichtungsprobleme somit einfachst gelöst werden können. Die vorteilhafte symmetrische Ausgestaltung des Dichtrings wird dabei aufgegeben, um ein fallspezifisches Problem lösen zu können.

In weiterer Ausgestaltung der Erfindung weist der Dichtring jeweils zur niederdruckseitigen Nutflanke ausgerichtete Kegelflächen auf, die in Verbindung miteinander einen Winkel einschließen. Dies hat den Vorteil, daß der erfindungsgemäße Dichtring auch in axialer Richtung gesehen hochflexibel ist und druckabhängig verschiedenste Arbeitslagen im Nutraum einnehmen können. Diese veränderten Arbeitslagen stellen sich je nach Druck kontinuierlich ein.

Eine besondere Verwendung des erfindungsgemäßen Dichtrings ergibt sich für Drehdurchführungen in der Hydraulik, insbesondere bei Baggern und ähnlichen Geräten

Der erfindungsgemäße Dichtring entspricht damit allen erweiterten Anforderungen, die im Hydraulikbereich gestellt werden. Der Dichtring besteht im Bereich der dynamischen Dichtkante aus einem Vollprofil und im Bereich der statischen Dichtkante bzw. Dichtkanten aus einem zerklüfteten Profil. Ein bevorzugtes Profil ergibt sich dadurch, daß an den radial gerichteten Flanken des Dichtrings Kegelflächen aneinandergereiht werden. Ist der erfindungsgemäße Dichtring symmetrisch aufgebaut, so ist die Montagerichtung beliebig. Weißt der erfindungsgemäße Dichtring zwei Absätze (Dichtlippen) auf, so wird die sich im drucklosen Betriebszustand ergebene Interferenz im statischen Abdichtungsbereich kompenziert. Dies ermöglicht die Realisation großer Interferenzen, ohne daß ein hohes Reibungsmoment bei Niederdruck entstehen würde. Eine Beabstandung des Dichtprofils von den Nutflanken unterstützt die Flexibilität des Dichtprofils. Bei Druckbeaufschlagung kommt es zu einem Verschwenkvorgang des erfindungsgemäßen Dichtrings im Einbauraum, der durch definiert erzeugte Spannungen im Dichtprofil die Belastung an der dynamischen Dichtkante vorteilhaft beeinflußt, indem ein lokales Pressungsmaximum ausgebildet wird. Durch den Verschwenkvorgang wird die Pressungsverteilung im Bereich der dynamischen Dichtfläche so eingestellt, daß sich vor der eigentlichen Dichtkante ein Schmierfilm bilden kann. Eine große radiale Anlagefläche an der niederdruckseitigen Nutflanke und das zusätzliche Verstemmen durch den Verschwenkvorgang bringen eine hohe Sicherheit gegen Verdrehen (Lagefixierung in der Nut). Mit dem erfindungsgemäßen Dichtring lassen sich niedrige Reibmomente realisieren, der Dichtring ist hoch Druck belastbar, er ist verschleiß- und extrusionsfest und robust bei der Montage. Einer Alterung des gummielastischen Materials kann über die scharnierartigen Absätze im statischen Abdichtungsbereich ausgeglichen werden (PUR-Kompressionsset-Ausgleich). Schließlich sei noch die Unempfindlichkeit im Abdichtverhalten bei maßlichen Toleranzen der Maschinenteile bzw. beim erfindungsgemäßen Dichtring erwähnt.

Der Erfindungsgedanke erfaßt auch Dichtringquerschnittsformen eines Lippendichtrings mit Berührungslinien (z. B. Vierlippendichtring) oder einer Doppel-T-Form, sofern diese Querschnitte so ausgelegt sind, daß Interferenzen von Dichtring zu Einbauraum im drucklosen Zustand im Bereich der statischen Abdichtung abbaubar sind, und daß der erfindungsgemäße Dichtring im fluiddruckbeaufschlagten Zustand reversibel zu einer niederdruckseitigen Stützfläche auslenkbar ist. Die Auslenkung kann auch ein Abrollvorgang sein und an sich bekannte Dichtquerschnittsformen können dadurch vom hier angesprochenen Erfindungsgedanken Gebrauch machen, indem sie über die Länge und/oder Breite der Querschnittsform unter Druckbelastung unterschiedlich stark reversibel deformierbare Materialien, Materialabschnitte oder Materialzusätze aufweisen und dadurch ein Einbau- bzw. Betriebsverhalten einnehemen, das in den Patentansprüchen formuliert ist. Die druckbeeinflußbare Körpergeometrien können auch durch Ausnehmungen beliebiger Art erzeugt werden und können die unter definierten Winkeln aneinandergrenzende Abschnitte bzw. Flächen ersetzen.

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Erfindung ist in der Zeichnung dargestellt und wird anhand von Ausführungsbeispielen näher erläutert. Es zeigt:
- Fig. 1: einen erfindungsgemäßen Dichtring im Querschnitt ohne einen Einbauraum, für den dieser Dichtring vorgesehen ist;
- Fig. 2: einen erfindungsgemäßen Dichtring im Querschnitt, wie er im Nutraum eines ersten Maschinenteils montiert ist;
- Fig. 3: einen erfindungsgemäßen Dichtring im Querschnitt, wie er im Nutraum eines ersten und zweiten Maschinenelements montiert ist;
- Fig. 4: einen erfindungsgemäßen Dichtring im Querschnitt im Nutraum zwischen zwei Maschinenelementen unter Druckbeaufschlagung, mit einem Druck P₁;
- Fig. 5: einen erfindungsgemäßen Dichtring im Querschnitt, unter Druckbelastung mit einem Druck P₂, der größer ist P₁.

Die einzelnen Figuren der Zeichnung zeigen den erfindungsgemäßen Gegenstand teilweise stark schematisiert und sind nicht maßstäblich zu verstehen. Die Gegenstände der einzelnen Figuren und Abschnitte des erfindungsgemäßen Dichtrings sind teilweise stark vergrößert und überzogen stark verformt dargestellt, damit die Funktionsweise des erfindungsgemäßen Dichtrings besser gezeigt werden kann.

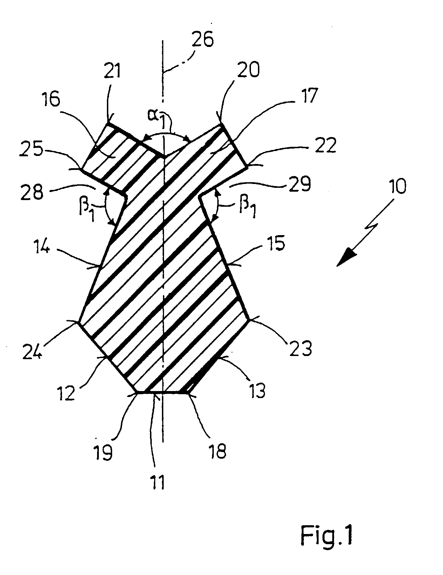

Fig. 1 zeigt einen Dichtring 10 aus gummielastischem Material, der eine Dichtringfläche 11 aufweist, an die sich eine erste Kegelfläche 12 und eine zweite Kegelfläche 13 anschließen. Die erste und zweite Kegelfläche 12, 13 verlaufen geneigt auseinander und an die Kegelflächen 12, 13 schließen sich dritte und vierte Kegelflächen 14, 15 an, die aufeinander zulaufen. An die dritten und vierten Kegelflächen 14, 15 schließen sich Absätze 16, 17 an, die unter einem Winkel β₁ mit den Kegelflächen 14, 15 verbunden sind. Die Absätze 16, 17 sind unter einem Winkel α₁ miteinander verbunden.

Die Dichtringfläche 11 bildet mit der ersten und zweiten Kegelfläche 12, 13 Schnittlinien 18, 19, die im Einsatz die Funktionen von Dichtkanten übernehmen. Die Kegelflächen 12, 13 bilden mit den dritten und vierten Kegelflächen 14, 15 Schnittlinien 23, 24, die im Einsatz Anlagelinien an ortsfesten Nutflanken bilden können.

Die Absätze 16, 17 weißen ebenfalls Schnittlinien 20, 21, 22, 25 auf, die im Einsatz die Funktion von statisch wirkenden Dichtkanten übernehmen können. An die Absätze 16, 17 schließen sich in radialer Richtung zur Dichtringfläche 11 hin Ausnehmungen 28, 29 an.

Der in Fig. 1 gezeigte Dichtring 10 ist symmetrisch bezüglich der Symmetrieachse 26 aufgebaut.

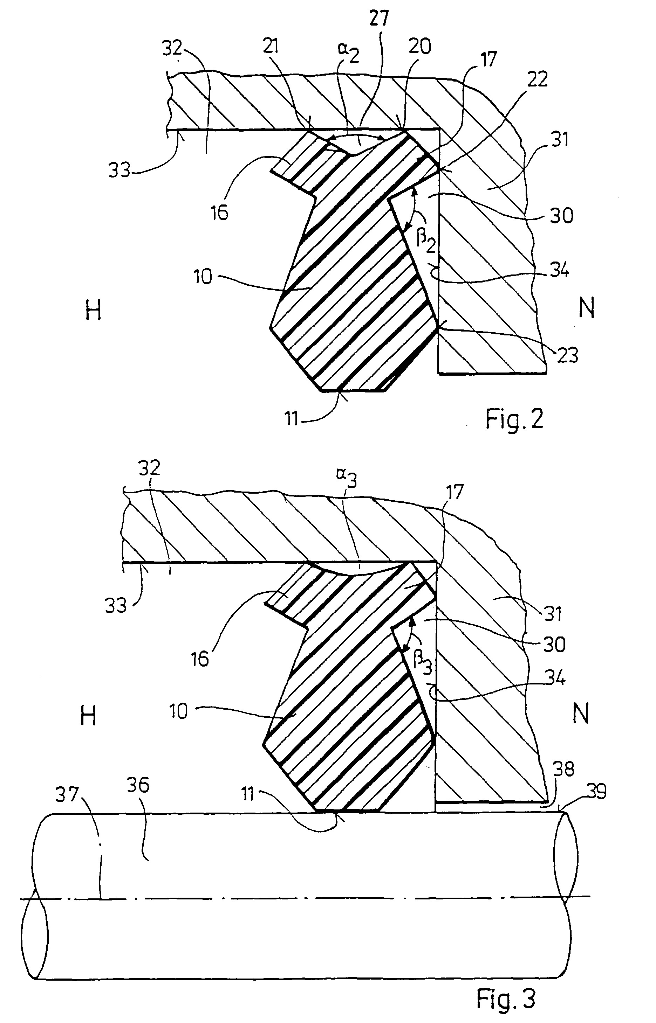

Fig. 2 zeigt den Dichtring 10, wie er in einem ersten Maschinenteil 31 in einer Nut 32 eingebaut ist. Der Dichtring 10 weißt gegenüber der Nut 32 ein Übermaß auf. Wird der Dichtring 10 in die Nut 32 eingebracht, so müssen die Absätze 16, 17 auseinandergespreizt werden, damit die Interferenz im statischen Abdichtungsbereich abgebaut werden kann. In der in Fig. 2 gezeigten Einbaulage ist der Dichtring 10 am Nutgrund 33 vorgespannt. Der Dichtring 10 liegt über die Schnittlinien 20, 21 am Nutgrund 33 an, und die Absätze (16, 17) und der Nutgrund (33) begrenzen einen Ringraum (27). Die Schnittlinien 20, 21 haben die Funktion statisch wirkender Dichtkanten. Über die Schnittlinien 22, 23 liegt der Dichtring 10 an einer niederdruckseitigen Nutflanke 34 an.

Durch den Einbau des Dichtrings 10 in die Nut 32 hat sich der Winkel α₂ gegenüber dem Winkel α₁ aus Fig. 1 vergrößert. Der Winkel β₂ hat sich gegenüber dem Winkel β₁ aus der Fig. 1 verkleinert, wobei durch den spreizbaren Absatz 17, die Dichtringfläche 15 und die niederdruckseitige Nutflanke 34 ein Freiraum 30 gebildet ist.

In der Fig. 2 ist mit H die Hochdruckseite gekennzeichnet und mit N die Niederdruckseite. In der Fig. 2 ist der Dichtring noch nicht fluiddruckbeaufschlagt.

Fig. 3 zeigt den erfindungsgemäßen Dichtring 10 in Einbaulage zwischen dem ersten Maschinenelement 31 und einem zweiten Maschinenelement 36. Die Maschinenelemente 31, 36 sind bezüglich der Achse 37 konzentrisch ausgelegt. Der Dichtring 10 dichtet einen Spalt 38 zwischen den Maschinenelementen 31, 36 ab. Der Dichtring 10 liegt im statischen Abdichtungsbereich mit den Absätzen 16, 17 am Nutgrund 33 an und im dynamischen Abdichtungsbereich liegt der Dichtring 10 mit der Dichtringfläche 11 auf einer Anlagefläche 39 des zweiten Maschinenelements 36 auf. In der gezeigten Stellung der Fig. 3 ist der Dichtring 10 noch nicht fluiddruckbeaufschlagt. Gegenüber der Darstellung in Fig. 2 hat sich der Winkel α₃ weiter gegenüber dem Winkel α₂ vergrößert, d. h., eine maßliche weitere Interferenz, die durch den Einschub des Maschinenelements 36 auszugleichen ist, wird über ein weiteres Verschwenken der Absätze 16, 17 im statischen Abdichtungsbereich ausgeglichen. Der Winkel β₃ hat sich gegenüber dem Winkel β₂ aus der Fig. 2 noch weiter verkleinert, so daß sich der Freiraum 30 durch die Zunahme der Fluiddruckbeaufschlagung verringert hat. Der Dichtring selbst liegt weitgehend druckfrei an der niederdruckseitigen Nutflanke 34 an. Der Dichtring 10 ist in der Fig. 3 noch nicht fluiddruckbeaufschlagt.

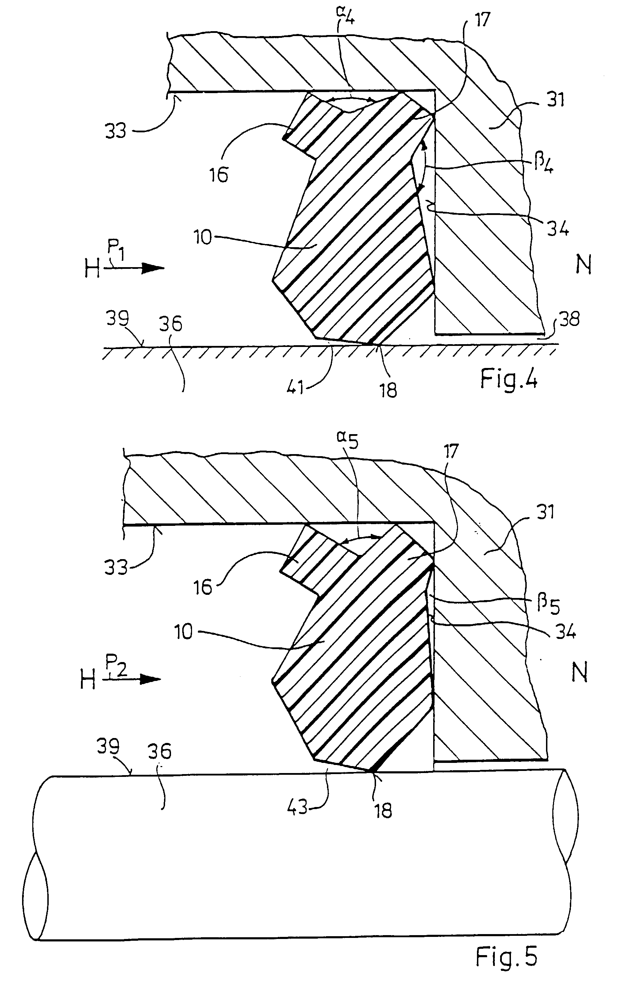

Fig. 4 zeigt den erfindungsgemäßen Dichtring 10 unter Druckbelastung von der Hochdruckseite H. Der Dichtring 10 wird in Pfeilrichtung mit einem Druck P₁ belastet. Über den Fluiddruck P₁ wird der Dichtring 10 verstärkt an die Nutflanke 34 gedrückt. Auf Grund der Profilgebung des erfindungsgemäßen Dichtrings 10 wird der Dichtring 10 zur Niederdruckseite N hin verschwenkt und gegenüber der Anlagefläche 39 bildet sich ein erster Keilspalt 41 aus, der sich zur Hochdruckseite H hin öffnet. Die Schnittlinie 18 übernimmt die Funktion einer dynamischen Dichtkante. Der Dichtring 10 liegt über eine Linienberührung auf der Anlagefläche 39 auf. Der Winkel α₄ hat sich weiter gegenüber dem Winkel α₃ verändert, weil sich über den Fluiddruck P₁ die Lage der Absätze 16, 17 im Druckbereich verändert hat. Der Winkel β₄ hat sich qualitativ gegenüber dem β₃ vergrößert, weil über den Fluiddruck P₁ der Dichtring 10 verstärkt an die niederdruckseitige Nutflanke 34 gedrückt ist. Das unter Druck stehende Fluid kann in den ersten Keilspalt 41 eindringen und somit eine gute Schmierung der Schnittlinie 18 gewährleisten.

Fig. 5 zeigt den erfindungsgemäßen Dichtring 10 unter Druckbelastung mit einem Fluiddruck P₂, der größer ist als der Fluiddruck P₁ aus der Fig. 4. Über den von der Hochdruckseite H hin anstehenden Fluiddruck P₂ wird der Dichtring 10 noch stärker an die niederdruckseitige Nutflanke 34 gedrückt und der Winkel β₅ verändert sich weiter gegenüber dem Winkel β₄ aus Fig. 4. Der Winkel α₅ hat sich qualitativ ebenfalls gegenüber dem Winkel β₄ aus Fig. 4 verändert. Im Bereich der Anlagefläche 39 hat sich ein zweiter Keilspalt 43 eingestellt, der gegenüber dem ersten Keilspalt 41 aus Fig. 4 vergrößert ist. Über die Absätze 16, 17 läßt sich der Dichtring 10 stark druckabhängig verformen. Diese Verformung ist reversibel und bildet sich bei fallendem Druck zurück.

Eine Anordnung zum Abdichten eines Spalts 38 zwischen zwei zueinander konzentrischen, gegeneinander beweglichen Maschinenteilen 31, 36 weißt in der Nut 32 einen Dichtring 10 auf, der ortsfest im Maschinenelement 31 montiert ist. Das Maschinenelement 36 ist gegenüber dem Maschinenelement 31 beweglich. Der erfindungsgemäße Dichtring 10 ist gegenüber radial und axial auf den Dichtring wirkende Kräfte flexibel. Die druckabhängigen Verformungen des Dichtrings 10 sind reversibel, d.h., bei fallendem Fluiddruck an der Hochdruckseite H bildet sich der Dichtring 10 selbständig in seine Ausgangsprofilierung zurück.

## Patentansprüche

1. Anordnung zum Abdichten eines Spalts (38) zwischen zwei zueinander konzentrischen, gegeneinander beweglichen Maschinenteilen (31, 36), von denen ein erstes Maschinenteil (31) eine Nut (32) und zweites Maschinenteil (36) eine der Nut (32) gegenüberliegende glatte Anlagefläche (39) aufweist, wobei in der Nut (32) ein Dichtring (10) aus einem gummielastischen Material einlegbar ist, wobei der Dichtring (10) unter Fluiddruckbeaufschlagung in Richtung einer radial gerichteten Fläche (34) der Nut (32) auslenkbar ist, wobei sich die druckabhängige Auslenkung des Dichtrings (10) bei einer Druckerniedrigung selbsttätig, in Richtung der Ausgangslage des Dichtrings (10) im drucklosen Zustand, erniedrigt, wobei der Dichtring (10) zum Nutgrund (33) gerichtete spreizbare Absätze (16, 17) aufweist, die den Bereich einer statischen Abdichtung und mit dem Nutgrund (33) einen begrenzten, abgeschlossenen Ringraum (27) bilden, wobei der Dichtring (10) über Schnittlinien (20, 21) der Absätze (16, 17) am Nutgrund (33) anliegend radial vorgespannt ist, wobei eine Dichtringfläche (11) mit der Anlagefläche (39) den Bereich einer dynamischen Abdichtung bildet, die proportional zur Fluiddruckbeaufschlagung druckentlastbar ist und wobei der Dichtring (10), im Querschnitt gesehen, im Bereich der dynamischen Abdichtung eine druckresistente und im Bereich der statischen Abdichtung eine stark druckbeeinflußbare Körpergeometrie aufweist,
dadurch gekennzeichnet,
daß der Dichtring (10), im Querschnitt gesehen, zur Hochdruckseite H und zur Niederdruckseite N hin offene Ausnehmungen (28, 29) aufweist, die in radialer Richtung die Absätze (16, 17) derart begrenzen, daß der Dichtring (10) bei einer Fluiddruckbeaufschlagung im Bereich der dynamischen Abdichtung zur Niederdruckseite N hin verschwenkt und daß sich ein durch einen der spreizbaren Absätze (16, 17), eine von der niederdruckseitigen Aufnehmung (28, 29) erzeugte Dichtringfläche (15) und die niederdruckseitige Nutflanke (34) begrenzter Freiraum (30) verringert.

2. Dichtungsanordnung nach Anspruch 1, dadurch gekennzeichnet, daß die druckbeeinflußbaren Körpergeometrien von Dichtringabschnitten (12, 13, 14, 15, 16, 17) gebildet sind, die derart zueinander ausgerichtet sind, daß die Dichtringabschnitte (12, 13, 14, 15, 16, 17) druckabhängig veränderbare Winkel (α₁, α₂, α₃, α₄, α₅, β₁, β₂, β₃, β₄, β₅) definieren.

3. Dichtungsanordnung nach Anspruch 1 oder 2, dadurch gekennzeichnet, daß der Dichtring (10) mit der Dichtringfläche (11) und der Anlagefläche (39) bei einer Fluiddruckbeaufschlagung einen sich zur Hochdruckseite H hin öffnenden, in der Größe druckabhängigen, Keilspalt (41; 43) bildet.

4. Dichtungsanordnung nach einem der Ansprüche 1 bis 3, dadurch gekennzeichnet, daß der Dichtring (10), im Querschnitt gesehen, von der Dichtringfläche (11), die zur Anlagefläche (39) hinweist, von an die Dichtringfläche (11) angrenzenden geneigt auseinanderlaufenden ersten und zweiten Kegelflächen (12, 13), von an die ersten und zweiten Kegelflächen (12, 13) angrenzenden geneigten aufeinander zulaufenden dritten und vierten Kegelflächen (14, 15) und von sich daran anschließenden geneigt auseinander laufenden ersten und zweiten Absätzen (16, 17) gebildet ist und daß die dritten und vierten Kegelflächen (14, 15) mit den Absätzen (16, 17) die Ausnehmungen (28, 29) begrenzen, wobei die Absätze (16, 17) zum Nutgrund (33) weisend unter einem Winkel (α₁, α₂, α₃, α₄, α₅) miteinander verbunden sind und mit den dritten und vierten KIegelflächen (14, 15) einen Winkel (β₁, β₂, β₃, β₄, β₅) bilden.

5. Dichtungsanordnung nach der Ansprüche 1 bis 4, dadurch gekennzeichnet, daß der Dichtring (10) symmetrisch aufgebaut ist.

6. Dichtungsanordnung nach Anspruch 5, dadurch gekennzeichnet, daß die Absätze (16, 17) auf der Hochdruckseite H und der Niederdruckseite N unterschiedlich lang und/oder breit ausgebildet sind.

7. Dichtungsanordnung nach einem der Ansprüche 4 bis 6, dadurch gekennzeichnet, daß der Dichtring (10), jeweils zur niederdruckseitigen Nutflanke (34) ausgerichtet, Kegelflächen (13, 15, 12, 14) aufweist, die einen Winkel (β₁, β₂, β₃, β₄, β₅) einschließen.

8. Verwendung der Dichtungsanordnung nach einem der Ansprüche 1 bis 7 für Drehdurchführungen in der Hydraulik.

## Claims

1. Sealing arrangement for sealing a gap (38) between two mutually concentric machine parts (31, 36) which move relatively to each other, a first machine part (31) having a groove (32) and a second machine part (36) having a smooth seating surface (39) facing the groove (32), whereby a sealing ring (10) made from a rubber elastic material can be placed into the groove (32), and the sealing ring (10) can be deflected towards a radially directed surface (34) of the groove (32) under the application of fluid pressure, and whereby, when the pressure is reduced, the pressure dependent deflection of the sealing ring (10) is automatically reduced towards the original position of the sealing ring (10) in the pressureless state,
whereby the sealing ring (10) exhibits spreadable shoulders (16, 17) facing the bottom of the groove (33) which form a region of static sealing and a closed ring-shaped volume (27) with the groove bottom (33), whereby the sealing ring (10) is prebiased via lines of intersection (20, 21) of the shoulders (16, 17) seated on the bottom of the groove (33), and a sealing ring surface (11) forms a region of dynamic sealing with the seating surface (39) which can be pressure relieved in proportion to the applied fluid pressure, and the sealing ring (10) exhibits a cross section having a body geometry which is resistant to pressure in the vicinity of the dynamic seal and which can be substantially changed by pressure in the vicinity of the static seal,
characterized in that,
the sealing ring (10) has a cross section having recesses (28, 29) which open towards the high pressure H and low pressure N sides and which radially define the shoulders (16, 17) in such a fashion that the sealing ring (10) pivots towards the low pressure side N under the application of fluid pressure in the vicinity of the dynamic seal to reduce the size of a free volume (30) defined by the spreadable shoulders (16, 17), the sealing ring area (15) produced by the low pressure sided recess (28, 29), and the low pressure side of the groove (34).

2. Sealing arrangement according to claim 1, characterized in that body geometries which are changeable under pressure are formed from sealing ring sections (12, 13, 14, 15, 16, 17) which are directed relative to each other in such a fashion that the sealing ring sections (12, 13, 14, 15, 16, 17) define an angle (α₁, α₂, α₃, α₄, α₅, β₁, β₂, β₃, β₄, β₅) which changes under pressure.

3. Sealing arrangement according to claim 1 or 2,
characterized in that the sealing ring (10) forms a wedge shaped gap (41; 43) with the seating surface (39) and the sealing surface (11) under the application of fluid pressure which opens in the direction towards the high pressure side H and whose size is pressure dependent.

4. Sealing arrangement according to one of the claims 1 through 3, characterized in that the sealing ring (10) is formed, in cross section, from the sealing ring surface (11) which faces towards the seating surface (39), from first and second conical surfaces (12, 13) bordering the sealing ring surface (11) which spread obliquely apart, from third and fourth conical surfaces (14, 15) which travel towards another obliquely and border the first and second conical surfaces (12, 13), and from first and second shoulders (16, 17) which spread obliquely apart and are adjacent thereto, and the third and fourth conical surfaces (14, 15) define the recesses (28, 29) with the shoulders (16, 17), whereby the shoulders (16, 17) are connected to each other facing the bottom of the groove (33) at an angle (α₁, α₂, α₃, α₄, α₅) and form an angle (β₁, β₂, β₃, β₄, β₅) with the third and fourth conical surfaces (14, 15).

5. Sealing arrangement according to one of the claims 1 through 4, characterized in that the sealing ring (10) is constructed symmetrically.

6. Sealing arrangement according to claim 5, characterized in that the shoulders (16, 17) are formed on the high pressure side H and the low pressure side N with different lengths and widths.

7. Sealing arrangement according to one of the claims 4 through 6, characterized in that the sealing ring (10) exhibits conical surfaces (13, 15, 12, 14) directed in each case towards the low pressure side of the groove (34) which are connected to enclose an angle (β₁, β₂, β₃, β₄, β₅).

8. Application of the sealing arrangement according to one of the claims 1 through 7 for rotational feed-throughs in hydraulics.

## Revendications

1. Dispositif pour l'étanchéité d'une fente (38) entre deux pièces de machine (31, 36), concentriques l'une à l'autre, mobiles l'une par rapport à l'autre, dont une première pièce de machine (31) présente une rainure (32) et une seconde pièce de machine (36) présente une surface d'appui lisse (39), opposée à la rainure (32), dans le cas duquel on peut insérer dans la rainure (32) une bague d'étanchéité (10) en un matériau à élasticité de type caoutchouc, dans le cas duquel la bague d'étanchéité (10) peut, lorsqu'elle est sous pression d'un fluide, se déformer en direction d'une surface (34), orientée radialement, de la rainure (32), dans le cas duquel la déformation, fonction de la pression, de la bague d'étanchéité (10) diminue automatiquement, en cas de diminution de la pression, dans le sens de la position initiale de la bague d'étanchéité (10) à l'état sans pression, dans le cas duquel la bague d'étanchéité (10) présente des talons (16, 17) qui sont orientés en direction du fond (33) de la rainure, peuvent s'expanser et forment la zone d'une étanchéité statique et, avec le fond (33) de la rainure, un espace annulaire (27) limité, clos, dans le cas duquel la bague d'étanchéité (10) est précontrainte radialement contre le fond (33) de la rainure le long de lignes de coupe (20, 21) des talons (16, 17), dans le cas duquel une surface (11) de la bague d'étanchéité forme, avec la surface d'appui (39), la zone d'une étanchéité dynamique qui peut être déchargée de la pression proportionnellement à la contrainte exercée par la pression du fluide, et dans le cas duquel la bague d'étanchéité (10), vue en coupe, présente, dans la zone de l'étanchéité dynamique, des caractéristiques géométriques de la pièce résistantes à la pression et, dans la zone de l'étanchéité statique, des caractéristique géométriques de la pièce fortement influençables par la pression,
caractérisé,
par le fait que, vue en coupe, la bague d'étanchéité (10) présente des évidements (28, 29) qui sont ouverts en direction du côté haute pression H et du côté basse pression N et qui, en direction radiale, limite les talons (16, 17) de façon que, lorsqu'elle est sous pression d'un fluide, la bague d'étanchéité (10), dans la zone de l'étanchéité dynamique, pivote vers le côté basse pression N et que se réduit un espace libre (30) limité par l'un des talons expansibles (16, 17), une surface (15) de la bague d'étanchéité produit par l'évidement (28, 29) situé du côté basse pression et le flanc (34), situé du côté basse pression, de la rainure.

2. Dispositif d'étanchéité selon la revendication 1, caractérisé par le fait que les caractéristiques géométriques, influençables par la pression, de la pièce sont formées par des portions (12, 13, 14, 15, 16, 17) de la bague d'étanchéité qui sont orientées l'une par rapport à l'autre de façon telle que les portions (12, 13, 14, 15, 16, 17) de la bague d'étanchéité définissent des angles (α₁, α₂, α₃, α₄, α₅, β₁, β₂, β₃, β₄, β₅) qui peuvent se modifier en fonction de la pression.

3. Dispositif d'étanchéité selon la revendication 1 ou 2, caractérisé par le fait que lorsqu'elle est sous pression d'un fluide, la bague d'étanchéité (10) forme, avec la surface (11) de la bague d'étanchéité (10) et la surface d'appui (39), un interstice en forme de coin (41; 43) dont la grandeur dépend de la pression et qui s'ouvre en direction du côté haute pression (H).

4. Dispositif d'étanchéité selon la revendication 1 à 3, caractérisé par le fait que, vue, en coupe, la bague d'étanchéité (10) est formée par la surface (11) de la bague d'étanchéité (10) orientée en direction de la surface d'appui (39), par une première et une seconde surfaces coniques (12, 13) adjacentes à la surface (11) de la bague d'étanchéité et s'écartant l'une de l'autre de par leur inclinaison, par une troisième et une quatrième surfaces coniques 14, 15) adjacentes à la première et à la seconde surfaces coniques (12, 13) et se rapprochant l'une de l'autre de par leur inclinaison et par un premier et un second talons (16, 17) qui leur sont adjacents et s'écartent l'un de l'autre de par leur inclinaison et par le fait que les troisième et quatrième surfaces coniques (14, 15) limitent, avec les talons (16, 17), les évidements (28, 29), les talons (16, 17) étant, en direction du fond (33) de la rainure, reliés l'un à l'autre sous un angle (α₁, α₂, α₃, α₄, α₅) et formant avec les troisième et quatrième surfaces coniques (14, 15) un angle (β₁, β₂, β₃, β₄, β₅).

5. Dispositif d'étanchéité selon la revendication 1 à 4, caractérisé par le fait que la bague d'étanchéité (10) est de construction symétrique.

6. Dispositif d'étanchéité selon la revendication 5, caractérisé par le fait que les talons (16, 17) sont conçus de longueur et/ou de largeur différente du côté haute pression H et du côté basse pression N.

7. Dispositif d'étanchéité selon l'une des revendications 4 à 6, caractérisé par le fait que la bague d'étanchéité (10) présente des surfaces coniques (13, 15, 12, 14) qui forment un angle (β₁, β₂, β₃, β₄, β₅) mais s'alignent vers le flanc (34) de la rainure, du côté basse pression.

8. Emploi du dispositif d'étanchéité selon l'une des revendications 1 à 7 pour des traversées tournantes en hydraulique.
